# EUROPEAN PATENT APPLICATION

(11) **EP 1 767 856 A1**
(43) Date of publication of application: **28.03.2007**
(21) Application number: 04799883.6
(22) Date of filing: 24.11.2004
(51) Int. Cl.: F23G 5/24

(54) **TUYERE STRUCTURE OF WASTE FUSION FURNACE AND COMBUSTIBLE DUST BLOWING METHOD**

(30) Priority: 11.06.2004 JP 2004174243
(71) Applicant: Nippon Steel Engineering Co., Ltd, Tokyo 100-8071 (JP)
(72) Inventor: NISHI, Takeshi, Nippon Steel Engineering Co.Ltd, Kitakyushu-shi, Fukuoka 8048505 (JP); KATO, Yasuhiko, Nippon Steel Engineering Co.Ltd, Kitakyushu-shi, Fukuoka 8048505 (JP); SAKAI, Yuuzoh c/o Nippon Steel Engineering Co.Ltd, Kitakyushu-shi, Fukuoka 8048505 (JP); TANAKA, Hirokazu, c/o Nippon Steel Engineering Co., Kitakyushu-shi, Fukuoka 8048505 (JP); SHIBAIKE, Hideharu, Nippon Steel Engineering Co.Lt, Kitakyushu-shi, Fukuoka 8048505 (JP); MURAHASHI, Kazuki, Nippon Steel Engineering Col Lt, Kitakyushu-shi, Fukuoka 8048505 (JP)
(74) Representative: Vossius & Partner
(86) International application number: PCT/JP2004/017823
(87) International publication number: WO 2005/121646

(57) **Abstract**

The present invention provides a tuyere structure and method of blowing combustible dust making the combustible dust blown in from a tuyere of a waste melting furnace completely burn in front of the tuyere and thereby able to reduce the amount of usage of coke, that is, a tuyere structure in a waste melting furnace charging a furnace with waste together with coke and limestone, blowing in air or oxygen enriched air from a tuyere set in the furnace body, and drying, thermal decomposing, burning, and melting the waste, which structure makes the tuyere (20) a triple tube structure comprised of an inner tube (22) supplying combustible dust and air or oxygen enriched air, an intermediate tube (23) supplying ignition-use fuel of combustible dust, and an outer tube (24) supplying oxygen for burning the ignition-use fuel and by connecting these tubes at their front ends.

## Description

### TECHNICAL FIELD

The present invention relates to a system and method for blowing combustible dust into a waste melting furnace for melting municipal solid waste, industrial waste, and other waste.

### BACKGROUND ART

As one method of treatment of municipal solid waste (MSW), industrial waste, and other waste, a shaft furnace type of melting furnace has been used to dry, thermal decompose, burn, and melt wastes to convert it into slag and metals (see Japanese Patent Publication (A) No. 2001-21123 and Japanese Patent Publication (A) No. 2002-267127). FIG. 6 is an explanatory view of a conventional shaft furnace type of waste melting furnace. The waste melting furnace 1 is charged with wastes together with the sub materials like coke and limestone from the top of the furnace through the charging system 2 of a double seal valve mechanism. Slag is discharged from the tap hole 3 after the process of drying, thermal decomposition, burning, and melting in the furnace. The combustible material in the waste is partially thermal decompose and discharged as a gas. Further, part is burned by the air and oxygen blown from the tuyere at the bottom of the furnace, but the remaining combustible material becomes combustible dust which is discharged from the top of the melting furnace 1. The dust discharged from the top of the waste melting furnace 1 is collected by a combustible dust collecting system (dust collector) 5, stored in a combustible dust storage tank 6, fed out by a combustible dust feeding system 7, and blown from a tuyere 4 supplying the oxygen enriched air to the furnace. By blowing combustible dust from the tuyere 4, the amount of usage of coke can be reduced.

The exhaust gas passing through the combustible dust collecting system 5 is burned in a combustion chamber 8, its heat is recovered at a boiler 9, and the steam produced is sent to a steam turbine generator system 10. The exhaust gas of the boiler 9 is separated into the solid and gas phase by the dust collecting system 11 and exhausted by a blower 12 from a smokestack 13. The tuyere blowing combustible dust into the furnace is as described in Patent Document 2. To prevent wear due to dust, a double tube structure comprised of an inner tube supplying combustible dust and an outer tube supplying oxygen enriched air is used.

### DISCLOSURE OF THE INVENTION

To further reduce the amount of usage of coke, it may be considered to blow a large amount of combustible dust in from the tuyere, make it burn in front of the tuyere, and use that heat source instead of coke. However, in the prior art, when blowing in a large amount of combustible dust, part of the combustible dust will not ignite but will fly out of the furnace while unburned, so there was a limit to the reduction of the amount of usage of coke.

Therefore, the present invention provides a tuyere structure and method of blowing combustible dust making the combustible dust blown in from a tuyere of a waste melting furnace completely burn in front of the tuyere and thereby able to reduce the amount of usage of coke. The present invention has as its gist the following:
(1) A tuyere structure in a waste melting furnace charging a furnace with waste together with coke and limestone, blowing in air or oxygen enriched air from a tuyere set in the furnace body, and drying, thermal decomposing, burning, and melting the waste, the tuyere structure characterized by making the tuyere a triple tube structure comprised of an inner tube supplying combustible dust and air or oxygen enriched air, an intermediate tube supplying ignition-use fuel of combustible dust, and an outer tube supplying oxygen for burning the ignition-use fuel and by connecting these tubes at their front ends.
(2) A tuyere structure in a waste melting furnace as set forth in (1), characterized in that an ignition chamber is formed between the front ends of the tubes and a front end of the tuyere.
(3) A tuyere structure in a waste melting furnace as set forth in (2), characterized in that refractory or ceramic burner tiles are attached inside the ignition chamber.
(4) A tuyere structure in a waste melting furnace as set forth in (1) or (2), characterized by adjusting the discharge areas of the fluids so that the flow rate ratio of the ignition-use fuel of the combustible dust and the oxygen for burning the ignition-use fuel (flow rate of ignition-use fuel/flow rate of oxygen for burning ignition-use fuel) becomes 0.2 to 5.0 in range.
(5) A tuyere structure in a waste melting furnace as set forth in any one of (1) to (3), characterized by adjusting the discharge areas of the fluids so that the discharge flow rates of the ignition-use fuel of the combustible dust and oxygen for burning the ignition-use fuel become 10 to 50 m/s.
(6) A tuyere structure in a waste melting furnace as set forth in any one of (1) to (5), characterized positioning front ends of the inner tube supplying combustible dust and air or oxygen enriched air and the intermediate tube supplying ignition-use fuel of the combustible dust 30 to 100 mm deeper than the front end of the tuyere body tube and igniting the ignition-use fuel to form a high temperature atmosphere.
(7) A tuyere structure in a waste melting furnace as set forth in any one of (1) to (6), characterized by providing each of the supply lines for the combustible dust and oxygen enriched air, ignition-use fuel, and oxygen for burning ignition-use fuel with a check valve and an automatically operating nitrogen purge system.
(8) A method for blowing combustible dust into a waste melting furnace through a tuyere in a method of charging a waste melting furnace with waste together with coke and limestone, blowing air or oxygen enriched air from a tuyere, and drying, thermal decomposing burning, and melting the waste for disposal, the method for blowing combustible dust into a waste melting furnace characterized by making the tuyere a triple tube structure of an inner tube, intermediate tube, and outer tube and supplying the combustible dust together with air or oxygen enriched air from the inner tube, the ignition-use fuel of the combustible dust from the intermediate tube, and the oxygen for burning the ignition-use fuel from the outer tube into the furnace.
(9) A method for blowing combustible dust into a waste melting furnace as set forth in (8) characterized by blowing combustible dust and oxygen enriched air with an oxygen concentration of 25 to 40% from the inner tube.
(10) A method for blowing combustible dust into a waste melting furnace as set forth in (8) or (9) characterized by adjusting the amount of oxygen blown in from a lower tuyere to given an oxygen ratio of 0.9 to 1.1 in range with respect to the speed of supply of the combustible dust and ignition-use fuel of the combustible dust blown into the waste melting furnace and the coke charged into the waste melting furnace.
(11) A method for blowing combustible dust into a waste melting furnace as set forth in any one of (8) to (10) characterized in that the combustible dust is combustible dust comprised of one or more of combustible dust collected from gas produced in the waste melting furnace, biomass fuel, iron powder, shredder dust, ironmaking dust, and crushed waste plastic or waste tire scraps.
(12) A method for blowing combustible dust into a waste melting furnace as set forth in any one of (8) to (11) characterized in that the waste melting furnace is provided with upper and lower tuyeres and by blowing air for drying the waste from the upper tuyere, blowing oxygen enriched air for combustion and melting from the lower tuyere, and blowing combustible dust from the lower tuyere.

### BRIEF DESCRIPTION OF THE DRAWINGS

FIG. 1 is an explanatory view of a shaft furnace type of waste melting facility of the present invention.
FIG. 2 is a schematic view showing a tuyere structure of the present invention.
FIG. 3 is a schematic view showing another example of a tuyere structure of the present invention.
FIG. 4 is an explanatory view of a shaft furnace type of waste melting facility of another example of the present invention.
FIG. 5 is an explanatory view of a shaft furnace type of waste melting facility of another example of the present invention.
FIG. 6 is an explanatory view of a conventional shaft furnace type of waste melting facility.

In the present invention, as the combustible dust, combustible dust comprised of one or more of combustible dust collected from gas produced in the waste melting furnace, biomass fuel, iron powder, shredder dust, ironmaking dust, and crushed waste plastic or waste tire scraps may be used.

Note that the waste melting furnace may also be provided with an upper and lower tuyere, blow the air for drying the waste from the upper tuyere, blow the oxygen enriched air for burning and melting from the lower tuyere, and make the lower tuyere a triple tube structure so as to blow in the combustible dust.

### BEST MODE FOR WORKING THE INVENTION

The tuyere structure of the present invention is a structure in a waste melting furnace charging the waste in a furnace together with coke and limestone, blowing air or oxygen enriched air from a tuyere provided in the furnace, and drying, thermal decomposing, burning, and melting the waste to dispose of the waste, which structure makes the tuyere a triple tube structure comprised of an inner tube supplying combustible dust and air or oxygen enriched air, an intermediate tube supplying ignition-use fuel of the combustible dust, and outer tube supplying oxygen for burning the ignition-use fuel, connects the tubes at their front ends, and forms a flared bottom ignition chamber between the front ends of the tubes and the front end of the tuyere. At this time, the discharge flow rate of the combustible dust ignition-use fuel and the discharge flow rate of the oxygen for burning the ignition-use fuel are preferably, by experience, made 10 m/s to prevent backflow from the furnace.

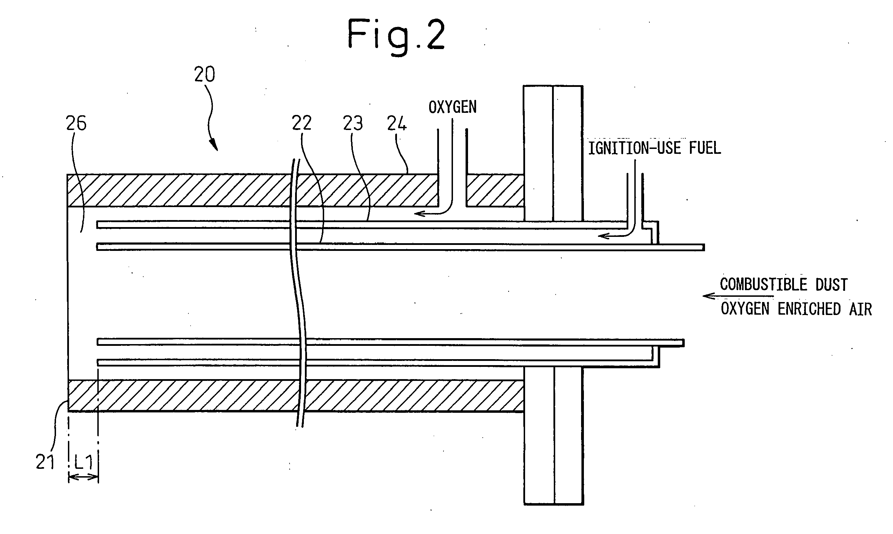

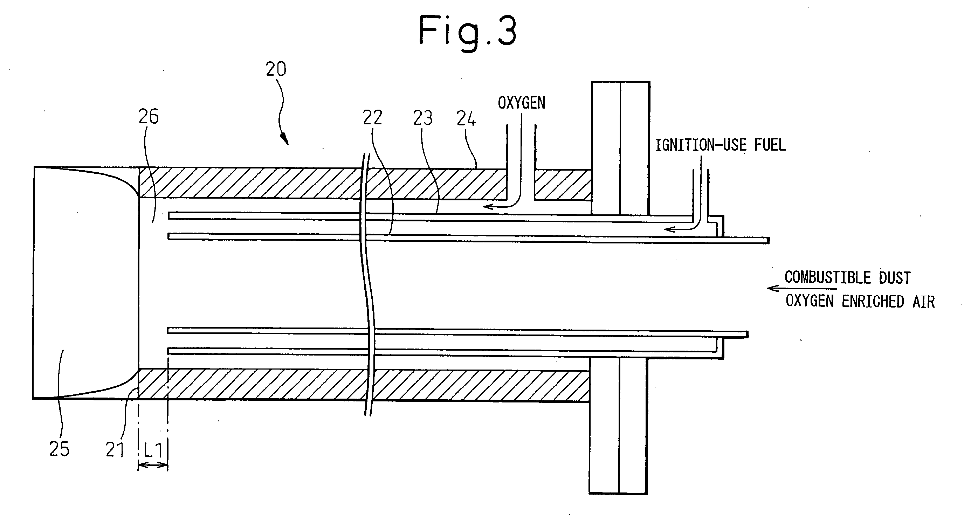

However, the flow rate ratio is defined as the (discharge flow rate of the ignition-use fuel (m/s)/discharge flow rate of oxygen for burning ignition-use fuel (m/s)). If adjusting the discharge areas of the fluids at the front end of the tuyere so that the flow rate ratio becomes a range of 0.2 to 5.0, the ignitability of the combustible dust blow from the inner tube can be improved more. The discharge areas are set so that the discharge flow rates of the fluids become, by actual flow rates, 10 to 50 m/s, whereby there is no clogging during operation or blowout of the flame and stabler operation becomes possible. The discharge area can be simply set if the ingredients of the combustible dust ignition-use fuel are known. Further, by adopting the structure such as shown in FIG. 2 or FIG. 3, even if changing the ignition-use fuel, the area ratio can be easily changed and operation is possible in a constantly optimal state.

Further, by setting the front ends of the inner tube and intermediate tube at positions 30 to 100 mm deeper than the front end of the tuyere (outer tube), the combustible dust reliably ignites in the tuyere and high temperature flame can be emitted from the front end of the tuyere. The inventors run numerical analyses and experiments regarding the distance from the front end of the tuyere and as a result set it to a range where the discharged flow from the front end of the tuyere becomes a parallel flow and the combustible dust blown from the inner tube does not abrade the outer tube. When shorter than 30 mm, a circulating flow is formed at the front end of the tuyere. In the actual operation of a waste melting furnace, the slag may clog the tuyere. Conversely, when longer than 100 mm, the combustible dust blown in from the inner tube strikes the outer tube and abrades the outer tube.

Further, the method of blowing the combustible dust of the present invention is a method of charging a waste melting furnace with waste together with coke and limestone, blowing air or oxygen enriched air from the tuyere, and drying, thermal decomposing, and melting the waste to dispose of the waste, specifically is a method of blowing combustible dust into a furnace through a tuyere, characterized by making the tuyere a triple tube structure of an inner tube, intermediate tube, and outer tube and supplying combustible dust together with air or oxygen enriched air from the inner tube, supplying ignition-use fuel of combustible dust from the intermediate tube, and supplying oxygen for burning the ignition-use fuel from the outer tube. At this time, what is blown into the inner tube along with the combustible dust may be either air or oxygen enriched air, but according to the results of experiments by the inventors, it was learned that if blowing in oxygen enriched air with an oxygen concentration of 25% or more, it is possible to emit a high temperature flame from the front end of the tuyere. However, even if making the oxygen concentration 40% or more, the melting temperature cannot be raised. This is assumed to be because the gas temperature near the tuyere rises if raising the oxygen concentration, but if rising to the 2000°C level, the thermal dissociation reaction etc. or the endothermic reaction of the gas become active and therefore the temperature no longer will rise further. For this reason, it is economic to make the upper limit of the oxygen concentration about 40% so as to suppress use of expensive oxygen.

Further, the method of blowing combustible dust of the present invention aims at having the combustible dust blown from the tuyere ignited at the front end of the tuyere so as to form a high temperature flame, so like with an ordinary burner, control of the air ratio (oxygen ratio) is important. The inventors define the oxygen ratio as follows and conducted tests.

Oxygen ratio = (amount of oxygen required for combustion of coke per unit time + amount of oxygen required for combustion of combustible dust per unit time + amount of oxygen required for combustion of combustible dust ignition-use fuel per unit time)/(amount of oxygen blown from lower tuyere inner tube per unit time + amount of oxygen blown from lower tuyere outer tube per unit time).

As a result, in particular when reducing the amount of usage of coke to 3% or less, it is learned that if making the oxygen ratio 0.9 to 1.1 or so, the slag temperature can be maintained.

### Example 1

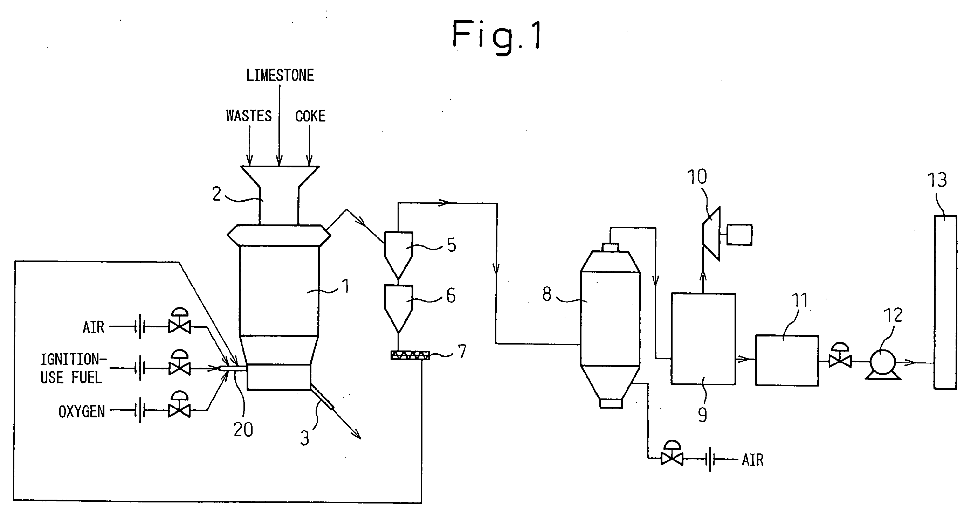

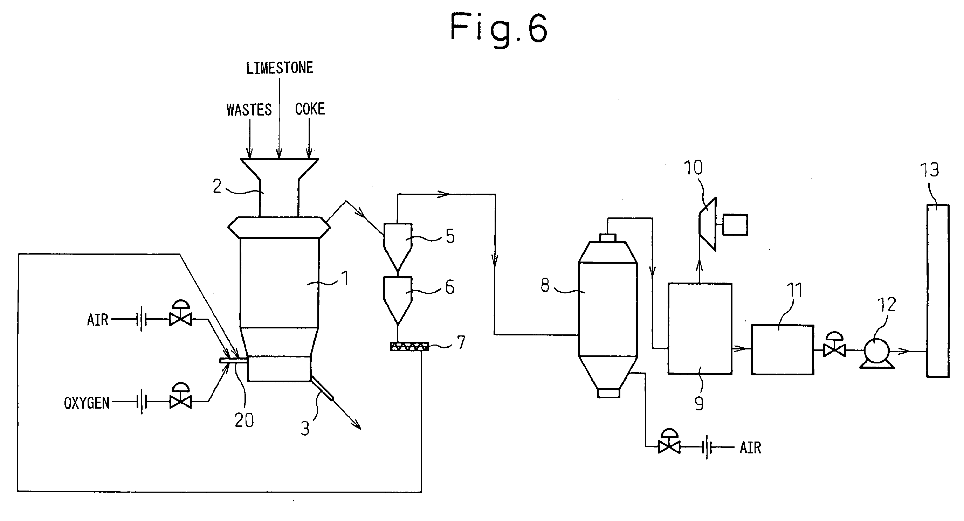

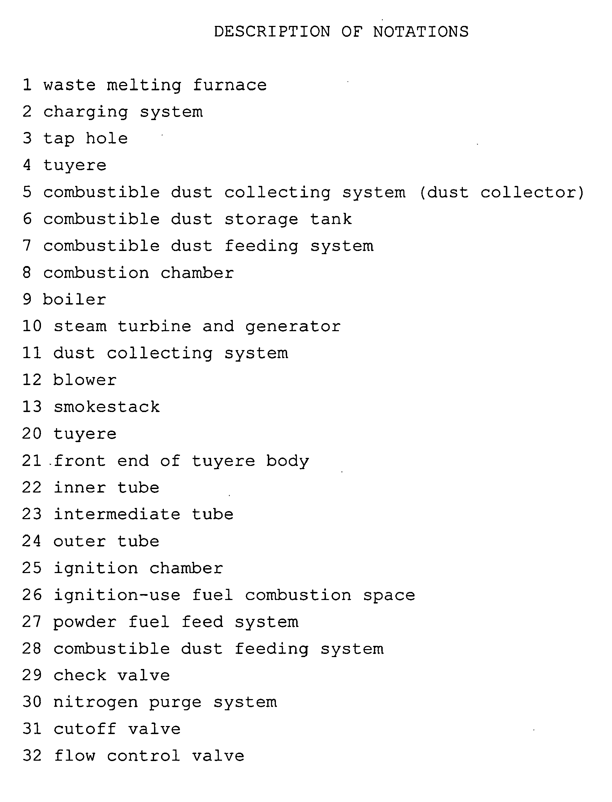

FIG. 1 is an explanatory view of a shaft furnace type of waste melting facility of the present invention. It is configured in the same way as the conventional example shown in the above FIG. 6, so the same parts of the configuration are assigned the same reference notations and explanations are omitted. This example is an example of use of combustible dust collected from the gas produced in the waste melting furnace.

In FIG. 1, the combustible dust in the gas discharged from the melting furnace 1 is collected by the combustible dust collecting system (dust collector) 5 made higher in pressure loss than the past and improved in collecting efficiency, stored in the combustible dust storage tank 6, fed out from the combustible dust feeding system 7, blown into the furnace from the tuyere 20 supplying the oxygen enriched air, and supplied with ignition-use fuel and oxygen.

FIG. 2 is a schematic view showing the tuyere structure of the present invention. In FIG. 2, the tuyere 20 is made a triple tube structure of an inner tube 22, an intermediate tube 23, and an outside tuyere body tube, that is, an outer tube 24 made of copper and having a water-cooled structure. The inner tube 22 supplies the combustible dust and oxygen enriched air, the intermediate tube 23 supplies the ignition-use fuel, and the outer tube 24 supplies oxygen for the ignition fuel combustion. The front ends of the tubes 22, 23, and 24 are open and communicated with each other. Further, as shown in FIG. 3, the front end of the tuyere 20 may also be formed with a flared bottom ignition chamber 25. The intermediate tube 23 for example supplies a gaseous fuel such as city gas or LPG or a liquid fuel such as kerosine or heavy oil, while the outer tube 24 supplies oxygen. The oxygen of the outer tube 24 is blown in by an amount giving an oxygen ratio of 1 with the fuel supplied from the intermediate tube 23. The ignition chamber 25 is formed by installing refractory or ceramic burner tiles.

Further, the front ends of the tubes 22 and 23 may be positioned deeper from the front end 21 of the tuyere body tube by L1 and form an ignition-use fuel combustion space 26 for igniting the ignition-use fuel and forming a high temperature atmosphere.

By making the tuyere 20 a triple tube structure and having the inner tube 22 transport combustible dust by oxygen enriched air, having the intermediate tube 23 supply ignition-use fuel, and having the outer tube 24 supply oxygen for the ignition fuel, the combustible dust and the fuel are ignited and burned in the ignition chamber 25.

Table 1 shows the conditions of four types of tuyeres. An ordinary temperature atmosphere was used for the combustion tests. Here, for the combustible dust, combustible dust collected from the gas produced from the melting furnace is used, while for the ignition-use fuel, LPG is used. In a furnace, the temperature is far higher than in the atmosphere and the dust is easily burned, so tests under stricter conditions can be assumed.

**Table 1**

| Examples of tuyeres | Structure |
|---|---|
| Comparative example | Double tube structure Inner tube: combustible dust +oxygen enriched air Outer tube: LPG |
| Example 1 | Triple tube structure (without ignition chamber) |
| Example 2 | Triple tube structure (with ignition chamber) |
| Example 3 | Triple tube structure (ignition chamber + ignition fuel combustion space) |

The lower limit of the amount of LPG blown by which the tuyeres can maintain the flame (Nm³/h), the temperature at the front of the tuyere (°C), and the upper limit of the amount of dust supplied by which no unburned component is formed (kg/h) are as shown by the test results in Table 2.

**Table 2**

| | LPG (Nm³/h) | Flame temperature (°C) | Amount of dust burned kg/h |
|---|---|---|---|
| Comparative Example | 3 | 660 | 30 |
| Example 1 | 1 | 1230 | 50 |
| Example 2 | 0.5 | 1425 | 75 |
| Example 3 | 0.2 | 1440 | 80 |

As a result of the test, unless blowing the LPG, the flame cannot be maintained. It was learned that in the tuyere of the comparative example, the flame went out, but in the example of the present invention, a small amount of LPG blown in enabled high temperature combustion of a large amount of dust and enabled a high performance.

### Example 2

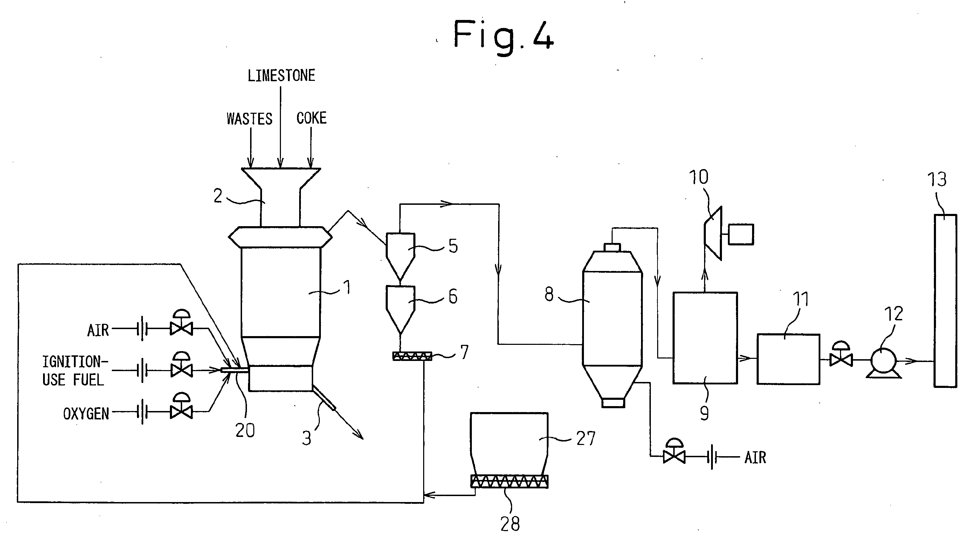

FIG. 4 is an explanatory view of a shaft furnace type of waste melting facility of an example of the present invention and an example of provision of a powder fuel feed system in Example 1 shown in FIG. 1. In FIG. 4, the combustible dust exhausted from the top of the melting furnace 1 is collected at a combustible dust collecting system (dust collector) 5, stored in the combustible dust storage tank 6, fed out by a combustible dust feeding system 7, blown into the furnace from the tuyere 20 supplying the oxygen enriched air, and supplied with ignition-use fuel. In this example, a powder fuel feed system 27 is installed, can store biomass fuel, iron powder, shredder dust, ironmaking dust, and crushed waste plastic, and waste tire scraps, feed these out by the combustible dust feeding system 28, and blow these out alone or in mixture in addition to the combustible dust collected by the dust collector 5. Due to this, it becomes possible to further reduce the use of coke. If the combustible dust has a particle size of 5 mm or more, there will be no clogging of the system and combustion in the furnace will also become good. Even if blowing the combustible dust into the furnace, the carbon in the fuel and the iron burn and the heat of combustion enables the amount of usage of coke to be reduced.

### Example 3

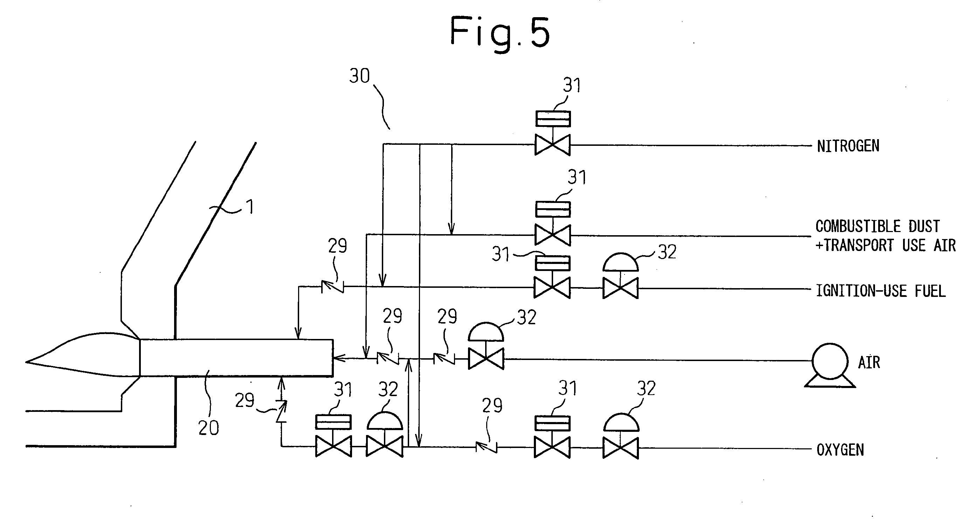

FIG. 5 is an explanatory view of a shaft furnace type of waste melting facility of another example of the present invention. This example provides each of the supply lines of the combustible dust and oxygen enriched air, ignition-use fuel, and oxygen for burning the ignition-use fuel to the tuyere 20 a check valve 29 and an automatically operating nitrogen purge system 30. Note that 31 indicates a cutoff valve, while 32 indicates a flow control valve.

### INDUSTRIAL APPLICABILITY

By making the tuyere of the waste melting furnace a triple tube structure, supplying the combustible dust and oxygen enriched air from the inner tube, supplying the ignition-use fuel from the intermediate tube, and supplying the oxygen for burning the ignition-use fuel from the outer tube, connecting them at the front ends, and forming a flared bottom ignition chamber between the front ends of the tubes and the front end of the tuyere, it is possible to make effective use of the heat of combustion of the combustible dust below in from the tuyere and greatly reduce the amount of usage of coke. Further, in addition to the combustible dust or instead of the combustible dust, it is possible to use the heat of combustion of biomass fuel, iron powder, ironmaking dust, etc. Further, it is possible to blow in crushed waste plastic and greatly reduce the amount of usage of coke.

## Claims

1. A tuyere structure in a waste melting furnace charging a furnace with waste together with coke and limestone, blowing in air or oxygen enriched air from a tuyere set in the furnace body, and drying, thermal decomposing, burning, and melting the waste, said tuyere structure **characterized by** making said tuyere a triple tube structure comprised of an inner tube supplying combustible dust and air or oxygen enriched air, an intermediate tube supplying ignition-use fuel of combustible dust, and an outer tube supplying oxygen for burning the ignition-use fuel and by connecting these tubes at their front ends.

2. A tuyere structure in a waste melting furnace as set forth in claim 1, **characterized in that** an ignition chamber is formed between the front ends of the tubes and a front end of the tuyere.

3. A tuyere structure in a waste melting furnace as set forth in claim 2, **characterized in that** refractory or ceramic burner tiles are attached inside the ignition chamber.

4. A tuyere structure in a waste melting furnace as set forth in claim 1 or 2, **characterized by** adjusting the discharge areas of the fluids so that the flow rate ratio of the ignition-use fuel of the combustible dust and the oxygen for burning the ignition-use fuel (flow rate of ignition-use fuel/flow rate of oxygen for burning ignition-use fuel) becomes 0.2 to 5.0 in range.

5. A tuyere structure in a waste melting furnace as set forth in any one of claims 1 to 3, **characterized by** adjusting the discharge areas of the fluids so that the discharge flow rates of the ignition-use fuel of the combustible dust and oxygen for burning the ignition-use fuel become 10 to 50 m/s.

6. A tuyere structure in a waste melting furnace as set forth in any one of claims 1 to 5, **characterized by** positioning front ends of the inner tube supplying combustible dust and air or oxygen enriched air and the intermediate tube supplying ignition-use fuel of the combustible dust 30 to 100 mm deeper than the front end of the tuyere body tube and igniting the ignition-use fuel to form a high temperature atmosphere.

7. A tuyere structure in a waste melting furnace as set forth in any one of claims 1 to 6, **characterized by** providing each of the supply lines for the combustible dust and oxygen enriched air, ignition-use fuel, and oxygen for burning ignition-use fuel with a check valve and an automatically operating nitrogen purge system.

8. A method for blowing combustible dust into a waste melting furnace through a tuyere in a method of charging a waste melting furnace with waste together with coke and limestone, blowing air or oxygen enriched air from a tuyere, and drying, thermal decomposing, burning, and melting the waste for disposal, said method for blowing combustible dust into a waste melting furnace **characterized by** making said tuyere a triple tube structure of an inner tube, intermediate tube, and outer tube and supplying the combustible dust together with air or oxygen enriched air from the inner tube, the ignition-use fuel of the combustible dust from the intermediate tube, and the oxygen for burning said ignition-use fuel from the outer tube into the furnace.

9. A method for blowing combustible dust into a waste melting furnace as set forth in claim 8, **characterized by** blowing combustible dust and oxygen enriched air with an oxygen concentration of 25 to 40% from the inner tube.

10. A method for blowing combustible dust into a waste melting furnace as set forth in claim 8 or 9, **characterized by** adjusting the amount of oxygen blown in from a lower tuyere to given an oxygen ratio of 0.9 to 1.1 in range with respect to the speed of supply of the combustible dust and ignition-use fuel of the combustible dust coke blown into the waste melting furnace and the coke charged into the waste melting furnace.

11. A method for blowing combustible dust into a waste melting furnace as set forth in any one of claims 8 to 10, **characterized in that** the combustible dust is combustible dust comprised of one or more of combustible dust collected from gas produced in the waste melting furnace, biomass fuel, iron powder, shredder dust, ironmaking dust, and crushed waste plastic or waste tire scraps.

12. A method for blowing combustible dust into a waste melting furnace as set forth in any one of claims 8 to 11 **characterized in that** said waste melting furnace is provided with upper and lower tuyeres and by blowing air for drying the waste from the upper tuyere, blowing oxygen enriched air for combustion and melting from the lower tuyere, and blowing combustible dust from the lower tuyere.

## Amended claims

### Amended claims under Art. 19.1 PCT

**1.** A tuyere structure in a waste melting furnace charging a furnace with waste together with coke and limestone, blowing in air or oxygen enriched air from a tuyere set in the furnace body, and drying, thermal decomposing, burning, and melting the waste, said tuyere structure **characterized by** making said tuyere a triple tube structure comprised of an inner tube supplying combustible dust and air or oxygen enriched air, an intermediate tube supplying ignition-use fuel of combustible dust, and an outer tube supplying oxygen for burning the ignition-use fuel and by connecting these tubes at their front ends.

**2.** A tuyere structure in a waste melting furnace as set forth in claim 1, **characterized in that** an ignition chamber is formed between the front ends of the tubes and a front end of the tuyere.

**3.** A tuyere structure in a waste melting furnace as set forth in claim 2, **characterized in that** refractory or ceramic burner tiles are attached inside the ignition chamber.

**4.** A tuyere structure in a refuse melting furnace as set forth in claim 1 or 2, **characterized by** adjusting the discharge areas of the fluids so that the flow rate ratio of the ignition-use fuel of the combustible dust and the oxygen for burning the ignition-use fuel (flow rate of ignition-use fuel/flow rate of oxygen for burning ignition-use fuel) becomes 0.2 to 5.0 in range.

**5.** A tuyere structure in a waste melting furnace as set forth in any one of claims 1 to 3, **characterized by** adjusting the discharge areas of the fluids so that the discharge flow rates of the ignition-use fuel of the combustible dust and oxygen for burning the ignition-use fuel become 10 to 50 m/s.

**6.** A tuyere structure in a waste melting furnace as set forth in any one of claims 1 to 5, **characterized by** positioning front ends of the inner tube supplying combustible dust and air or oxygen enriched air and the intermediate tube supplying ignition-use fuel of the combustible dust 30 to 100 mm deeper than the front end of the tuyere body tube and igniting the ignition-use fuel to form a high temperature atmosphere.

**7.** (Amended) A tuyere structure in a waste melting furnace as set forth in any one of claims 1 to 6, **characterized by** providing each of the supply lines for the combustible dust and oxygen enriched air, ignition-use fuel, and oxygen for burning ignition-use fuel with a check valve and a nitrogen purge system enabling nitrogen purging independent from other pipes and purging by nitrogen pipes not blowing any combustible dust and oxygen enriched air, ignition-use fuel, and oxygen for burning ignition-use fuel.

**8.** A method for blowing combustible dust into a waste melting furnace through a tuyere in a method of charging a refuse melting furnace with waste together with coke and limestone, blowing air or oxygen enriched air from a tuyere, and drying, thermal decomposing, burning, and melting the waste for disposal, said method for blowing combustible dust into a waste melting furnace **characterized by** making said tuyere a triple tube structure of an inner tube, intermediate tube, and outer tube and supplying the combustible dust together with air or oxygen enriched air from the inner tube, the ignition-use fuel of the combustible dust from the intermediate tube, and the oxygen for burning said ignition-use fuel from the outer tube into the furnace.

**9.** A method for blowing combustible dust into a waste melting furnace as set forth in claim 8, **characterized by** blowing combustible dust and oxygen enriched air with an oxygen concentration of 25 to 40% from the inner tube.

**10.** A method for blowing combustible dust into a waste melting furnace as set forth in claim 8 or 9, **characterized by** adjusting the amount of oxygen blown in from a lower tuyere to given an oxygen ratio of 0.9 to 1.1 in range with respect to the speed of supply of the combustible dust and ignition-use fuel of the combustible dust coke blown into the waste melting furnace and the coke charged into the waste melting furnace.

**11.** A method for blowing combustible dust into a waste melting furnace as set forth in any one of claims 8 to 10, **characterized in that** the combustible dust is combustible dust comprised of one or more of combustible dust collected from gas produced in the waste melting furnace, biomass fuel, iron powder, shredder dust, ironmaking dust, and crushed waste plastic or waste tire scraps.

**12.** A method for blowing combustible dust into a waste melting furnace as set forth in any one of claims 8 to 11 **characterized in that** said waste melting furnace is provided with upper and lower tuyeres and by blowing air for drying the waste from the upper tuyere, blowing oxygen enriched air for combustion and melting from the lower tuyere, and blowing combustible dust from the lower tuyere.
